# EUROPÄISCHE PATENTANMELDUNG

(11) **EP 0 732 837 A1**
(43) Veröffentlichungstag der Anmeldung: **18.09.1996**
(21) Anmeldenummer: 96103612.6
(22) Anmeldetag: 08.03.1996
(51) Int. Cl.: H04M 1/66, H04M 3/38

(54) **Verfahren zur Erkennung unberechtigter Nutzung von Teilnehmeranschlussleitungen mittels Teilnehmeridentifizierung**

(30) Priorität: 14.03.1995 DE 19510697
(71) Anmelder: DeTeWe - Deutsche Telephonwerke Aktiengesellschaft & Co., D-10997 Berlin (DE)
(72) Erfinder: Dummann, Uwe, 13409 Berlin (DE); Härtel, Helmut, 12277 Berlin (DE); Hertel, Andreas, 12043 Berlin (DE); Körner, Günter, 12355 Berlin (DE); Pfeiffer, Klaus, 12099 Berlin (DE)

(57) **Zusammenfassung**

Ein Verfahren zur Erkennung unberechtigter Nutzung von Teilnehmeranschlußleitungen mittels Teilnehmeridentifizierungen, die der Verbindung von Teilnehmereinrichtungen mit dem Netzknoten dienen, schlägt vor, bei Beginn eine Authentizierung zwischen den Einrichtungen beim Teilnehmer und im Netzknoten vorzunehmen und / oder nach der Wahl jeden Zeichens in der Zwischenwahlzeit mit einem geeigneten Übertragungsverfahren ein Signal von der Einrichtung beim Teilbnehemr zur Einrichtung im Netzknoten zu übertragen, das dort decodiert wird, wodurch die ordnungsgemäße Nutzung der Anschlußleitung festgestellt werden kann.

## Beschreibung

Die Erfindung betrifft ein Verfahren zur Erkennung unberechtigter Nutzung von Teilnehmeranschlußleitungen durch eine Teilnehmeridentifizierung zur Überwachung analoger Anschlußleitungen an analogen und/oder digitalen Netzknoten (z. B. Ortsvermittlungsstelle, Nebenstellenanlage usw.).

Die Teilnehmeranschlußleitungen werden über Kabel und Verteilungspunkte im öffentlichen Straßenland bzw. an und in öffentlichen oder privaten Gebäuden geführt. Eine Absicherung des Zuganges zu der Leitungsführung bzw. den Verteilungspunkten ist nach derzeitigem Stand der Technik nicht möglich. Darüber hinaus ist der Netzknoten nicht in der Lage zu erkennen, ob eine gewünschte Belegung über dieses Leitungsnetz von einem befugten Teilnehmer ausgeht.

Der Erfindung lag die Aufgabe zugrunde, ein unbefugtes Nutzen der Anschlußleitungen zwischen dem Übergabepunkt des Netzbetreibers zum Teilnehmer und dem Netzknoten des Netzbetreibers zu erkennen, zu signalisieren und ggf. zu verhindern. Hierbei ist sicherzustellen, daß das Funktionsverhalten der Anschlußleitung nicht beeinträchtigt wird. Weiterhin ist sicherzustellen, daß die Wahl von Notrufnummern sowie die volle Funktion der für das Verfahren verwendeten Einrichtungen über die Stromversorgung der Anschlußleitung vom Netzknoten gewährleistet ist.

Diese Aufgabe ist dadurch gelöst, daß am Übergabepunkt zwischen Netzbetreiber und Teilnehmer und am Netzknoten Einrichtungen installiert werden, mit denen es möglich ist, den berechtigten Zugang des Teilnehmers zum Netzknoten zu erkennen.

Mit diesem Verfahren wird die unbefugte Nutzung der Teilnehmeranschlußleitungen zwischen Netzknoten und Fernsprechteilnehmer erkannt und ggf. verhindert. Das Verfahren ermöglicht dem Netzbetreiber, den unberechtigten Zugang zum Netzknoten zu erkennen, ggf. für Ermittlungen zu nutzen oder eine solche Nutzung auszuschließen. Hierdurch wird verhindert, daß Dritte z. B. durch Aufschalten auf eine Teilnehmeranschlußleitung zu Lasten des Anschlußinhabers Verbindungen über den Netzknoten herstellen. Das Verfahren versetzt zudem den Netzbetreiber in die Lage, den Nachweis über ausschließlich ordnungsgemäße Nutzung seiner Anschlußleitungen zu erbringen. Manipulationen, die zu Differenzen bezüglich der berechtigten Nutzung der Anschlußleitungen zwischen Teilnehmer und Netzknotenbetreiber führen können, werden durch dieses Verfahren ausgeschlossen.

Die Erfindung wird anhand eines Blockschaltbildes nachfolgend näher beschrieben: An der Schnittstelle zwischen dem Verantwortungsbereich vom Teilnehmer und dem Netzbetreiber wird eine Einrichtung beim Teilnehmer als Signalgeber installiert. Eine andere Einrichtung für den Signalempfang wird im oder unmittelbar vor dem Netzknoten des Netzbetreibers geschaltet. Damit ist eine Überwachung der Leitungsstrecke zwischen dem Netzknoten und dem Teilnehmeranschluß ermöglicht.

Bei einem erkannten Zugangsbegehren des Teilnehmers zum Netzknoten sendet die Einrichtung beim Teilnehmer in der Wahlpause, der sogenannten Zwischenwahlzeit, nach jedem gewählten Zeichen mit einem geeigneten Übertragungsverfahren ein Signal zum Netzknoten. Dieses Signal wird gebildet aus einem nur der Teilnehmereinrichtung und der Einrichtung im Netzknoten bekannten Code, dem gewählten Zeichen, einer überlagerten dritten Frequenz zur Verhinderung des Erkennens eines Wählzeichen und zur Identifizierung des Signals in der Einrichtung beim Netzknoten und einem nur diesen beiden Einrichtungen bekannten Verschlüsselungsschema. Das Signal wird beispielsweise durch Tongeneratoren in den Einrichtungen des Teilnehmers erzeugt, die in einem Signalprozessor integriert sind.

Dieses Signal gewährleistet: Keinerlei Initialisierung und die Unabhängigkeit von allen übrigen Zugangsbegehren des Teilnehmers zum Netzknoten. Ferner ist eine Signaländerung nach jedem gewählten Zeichen durch das teilnehmerindividuelle Verschlüsselungsschema gegeben. Dieses gesendete Signal gewährleistet zudem eine Übertragungszeit ≦ 60 ms und stellt eine Signalisierung im Fernsprechfrequenzbereich von 300 bis 3400 Hz dar.

Die Einrichtung im Netzknoten ist in der Lage mittels eines geeigneten Empfängers das empfangene Signal zu decodieren und die ordnungsgemäße Nutzung der Anschlußleitung festzustellen bzw. einen Mißbrauch zu erkennen.

Zur Ausweitung des Sicherungsverfahrens ist zu Beginn eines Zugangsbegehrens die Teilnehmeridentifizierung mit einem Authentisierungsverfahren möglich. Hierzu ist die Einrichtung im Netzknoten um einen Security-Server zu erweitern und die Einrichtung beim Teilnehmer mit einem Identifikationsmerkmal, z. B. einer Chipkarte und einem Chipkartenleser, zu versehen. Dabei ist nur bei einer erfolgreichen Authentisierung ein Zugang bzw. eine Belegung zum Netzknoten möglich.

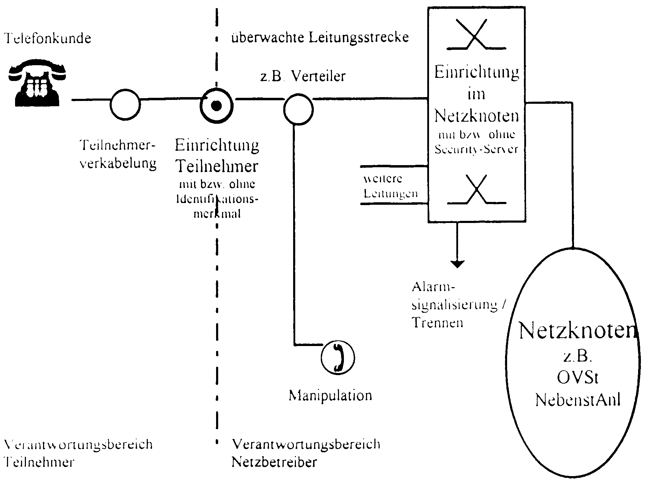

## Patentansprüche

1. Verfahren zur Erkennung unberechtigter Nutzung von Teilnehmeranschlußleitungen durch eine Teilnehmeridentifizierung zur Überwachung analoger Anschlußleitungen an analogen und/oder digitalen Netzknoten, dadurch gekennzeichnet, daß zwischen dem Übergabepunkt des Netzbetreibers beim Teilnehmer und dem Netzknoten des Netzbetreibers bei Beginn und/oder nach jedem gewählten Zeichen ein Signal von einer Einrichtung beim Teilnehmer gesendet wird, das in einer Einrichtung im Netzknoten ausgewertet wird.

2. Verfahren nach Anspruch 1, dadurch gekennzeichnet, daß zu Beginn einer Belegung eine Authentisierung zwischen dem Übergabepunkt des Netzbetreibers und dem Netzknoten durchgeführt wird.

3. Verfahren nach Anspruch 1 und 2, dadurch gekennzeichnet, daß nur bei erfolgter Authentisierung eine Belegung bzw. ein Zugang zum Netzknoten ermöglicht ist.

4. Verfahren nach Anspruch 1 bis 3, dadurch gekennzeichnet, daß nach Wahl jedes Zeichens in der Zwischenwahlzeit ein nach einem teilnehmerindividuellen Verfahren verschlüsseltes Signal, bestehend aus dem Teilnehmercode, dem gewählten Zeichen und einer dritten überlagerten Frequenz, übertragen wird.

5. Verfahren nach Anspruch 1, dadurch gekennzeichnet, daß sich das Signal nach jedem gewählten Zeichen einer Rufnummer ändert.

6. Verfahren nach Anspruch 1, dadurch gekennzeichnet, daß das Signal durch Tongeneratoren in den Einrichtungen beim Teilnehmer erzeugt wird.

7. Verfahren nach Anspruch 6, dadurch gekennzeichnet, daß die Tongeneratoren in einem Signalprozessor integriert sind.
